# EUROPÄISCHE PATENTSCHRIFT

(11) **EP 0 907 871 B1**
(45) Veröffentlichungstag und Bekanntmachung des Hinweises auf die Patenterteilung: **19.04.2000**
(21) Anmeldenummer: 97926955.2
(22) Anmeldetag: 02.07.1997
(51) Int. Cl.: F24F 12/00, F28D 17/02

(54) **KLIMAGERÄT**
AIR-CONDITIONER
APPAREIL DE CLIMATISATION

(30) Priorität: 04.07.1996 CH 168196
(43) Veröffentlichungstag der Anmeldung: 14.04.1999
(73) Patentinhaber: GRÜNIGER, Emil, CH-8852 Altendorf (CH)
(72) Erfinder: GRÜNIGER, Emil, CH-8852 Altendorf (CH)
(74) Vertreter: Patentanwälte Schaad, Balass, Menzl & Partner AG
(86) Internationale Anmeldenummer: CH9700260
(87) Internationale Veröffentlichungsnummer: WO9801711

(56) Entgegenhaltungen:
- WO-A-80/02064
- WO-A-95/18338
- WO-A-95/21357
- US-A- 5 193 610

## Beschreibung

Die vorliegende Erfindung betrifft ein Klimagerät gemäss dem Oberbegriff des Anspruchs 1.

Ein Klimagerät dieser Art ist beispielsweise aus der GB-Patentschrift Nr. 601023 bekannt. Es weist einen Wärmeübertrager mit zwei Strömungskanalsystemen auf, wobei das eine Strömungskanalsystem von einem ersten Fluidstrom und gleichzeitig das andere Strömungskanalsystem von einem zweiten Fluidstrom durchflossen sind. Der erste Fluidstrom wird von verbrauchter Abluft, die einem Raum entzogen wird, gebildet. Der zweite Fluidstrom ist von der Umgebung angesaugte Aussenluft, die durch den ersten Fluidstrom im Wärmeübertrager erwärmt wird. In Strömungsrichtung des ersten Fluidstroms gesehen stromabwärts des Wärmeübertragers, wird ein über eine Klappe gesteuerter Teil des ersten Fluidstroms umgeleitet und mit dem erwärmten zweiten Fluidstrom raumseitig des Wärmeübertragers gemischt, um mit diesem dem Raum zugeführt zu werden. Ein als Rekuperator wirkendes Klimagerät dieser Art eignet sich insbesondere für die Raumklimatisierung bei mitteleuropäischem Klima in der Übergangszeit. Weiter ist es dank der Bypassschaltung auf einfache Weise gut regelbar. Es hat sich aber gezeigt, dass Klimageräte dieser Art für den Einsatz bei tiefen und höheren Umgebungstemperaturen nicht optimal geeignet sind.

Ein Klimagerät unterschiedlicher Art ist aus der DE-A-26 34 449 und der entsprechenden GB-Patentschrift Nr. 1 555 505 bekannt. Es weist zwei Wärmespeicher mit je einem Strömungskanalsystem auf. Durch ein Klappensystem gesteuert durchströmt für eine bestimmte Zeitdauer der erste Fluidstrom das Strömungskanalsystem des einen Wärmespeichers und anschliessend für eine weitere Zeitdauer das Strömungskanalsystem des anderen Wärmespeichers und dies im Wechsel mit dem zweiten Fluidstrom. Der Fluidstrom mit der höheren Temperatur erwärmt somit den von ihm durchströmten Wärmespeicher, welcher anschliessend diese Wärme an den Fluidstrom mit tieferer Temperatur zu dessen Erwärmung abgibt. Solche auch als Regenerator bezeichneten Klimageräte weisen einen äusserst guten Wirkungsgrad auf und sind insbesondere für den Einsatz bei kalten und höheren Umgebungstemperaturen für die Klimatisierung von Räumen geeignet. In der Übergangszeit weisen sie insbesondere den Nachteil auf, dass auch Feuchte rückgewonnen wird, wenn dies nicht gewünscht ist.

Weiter offenbart die EP-A-0 167 938 einen Wärmetauscher- bzw. Wärmespeicherkörper zur Verwendung entweder nach dem Rekuperator- oder nach dem Regeneratorprinzip. Der Körper besteht aus einem Stapel von Hohlkammerplatten, wobei aufeinanderfolgende Platten für die Verwendung nach dem Rekuperatorprinzip jeweils mit im rechten Winkel zueinander und für die Verwendung nach dem Regeneratorprinzip mit parallel zueinander verlaufenden Kanälen angeordnet sein sollen.

Ausgehend von diesem Stand der Technik ist es eine Aufgabe der vorliegenden Erfindung, ein gattungsgemässes Klimagerät zu schaffen, das in grossem Umgebungstemperaturbereich mit optimalem Wirkungsgrad einsetzbar ist.

Diese Aufgabe wird mit einem Klimagerät gelöst, das die Merkmale des Anspruchs 1 aufweist.

Das erfindungsgemässe Klimagerät ist sowohl rekuperativ als auch regenerativ betreibbar. In beiden Betriebsarten werden dieselben Wärmerückgewinnungseinheiten, die im einen Fall als Wärmeübertrager und anderen Fall als Wärmespeicher dienen, verwendet. Im Vergleich mit den bekannten Klimageräten wird mit äusserst wenig zusätzlichem Aufwand ein Klimagerät geschaffen, das von tiefen bis zu hohen Umgebungstemperaturen optimal für die Raumklimatisierung einsetzbar ist.

Bevorzugte Ausbildungsformen des erfindungsgemässen Klimagerätes sind in den abhängigen Ansprüchen angegeben.

Die Erfindung wird nun anhand eines in der Zeichnung dargestellten Ausführungsbeispiels näher erläutert. Es zeigen rein schematisch:
- Fig. 1: in Ansicht ein erfindungsgemässes Klimagerät mit durchsichtig angenommener Frontwand des Gehäuses;
- Fig. 2: das in der Fig. 1 gezeigte Klimagerät in Draufsicht mit durchsichtig angenommener Deckenwand;
- Fig. 3: in Ansicht das in den Fig. 1 und 2 gezeigte Klimagerät mit strichpunktiert angedeutetem Verlauf der Fluidströme in rekuperativem Betrieb;
- Fig. 4: in Draufsicht das in den Fig. 1 und 2 gezeigte Klimagerät mit strichpunktiert angedeutetem Verlauf der Fluidströme in rekuperativem Betrieb;
- Fig. 5: in gleicher Darstellung wie Fig. 1 das Klimagerät in regenerativem Betrieb mit strichpunktiert angedeutetem Verlauf eines Fluidstromes durch die eine Wärmerückgewinnungseinheit während einer Betriebsphase;
- Fig. 6: in gleicher Darstellung wie Fig. 5 das Klimagerät mit strichpunktiert angedeutetem Verlauf des anderen Fluidstromes durch die andere Wärmerückgewinnungseinheit während derselben Betriebsphase; und
- Fig. 7: in gleicher Darstellung wie Fig. 2 das Klimagerät mit strichpunktiert angedeutetem Verlauf der beiden Fluidströme während derselben Betriebsphase wie in den Fig. 5 und 6.

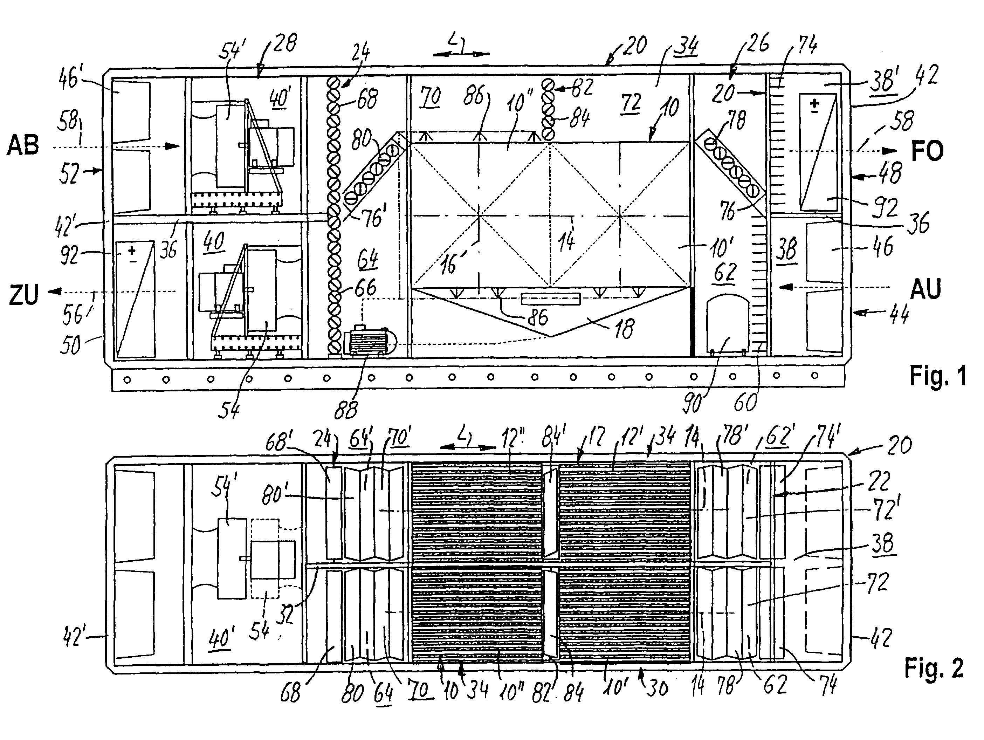

Das in den Fig. 1 und 2 gezeigte Klimagerät weist zwei Wärmerückgewinnungseinheiten 10, 12 auf, die je aus zwei, in Längsrichtung L des Klimagerätes gesehen, unmittelbar hintereinander angeordneten Kreuzstrom-Plattenwärmeübertragern 10', 10" bzw. 12', 12" bestehen. Jede Wärmerückgewinnungseinheit 10, 12 weist somit ein in Längsrichtung L durch die beiden Plattenwärmeübertrager 10', 10" bzw. 12', 12" hindurchverlaufendes erstes Strömungskanalsystem 14 sowie ein zweites Strömungskanalsystem 16 auf. Dieses besteht aus in jedem Plattenwärmeübertrager 10', 10", 12', 12" rechtwinklig zum ersten Strömungskanalsystem 14 verlaufenden Kanälen 16', wobei die Kanäle 16' der jeweils einer Wärmerückgewinnungseinheit 10, 12 zugeordneten Kreuzstrom-Plattenwärmeübertragern 10', 10", 12', 12" mittels eines unterhalb dieser angeordneten Auffang- und Umlenkbeckens 18 seriegeschaltet sind, so dass der entsprechende Fluidstrom U-förmig durch die Wärmerückgewinnungseinheit 10 bzw. 12 geführt wird.

Das Klimagerät weist ein liegendes quaderförmiges Gehäuse 20 auf, dessen Innenraum in Längsrichtung L gesehen durch eine erste Querwand 22 und eine zweite Querwand 24 in zwei Endabschnitte 26, 28 und einen zwischen den Querwänden 22, 24 angeordneten Mittenabschnitt 30 unterteilt ist. Der Mittenabschnitt ist durch eine in Längsrichtung L verlaufende vertikale Mittenabschnitt-Zwischenwand 32 in zwei nebeneinander angeordnete Mittenteile 34, 34' unterteilt. Im ersten Mittenteil 34 ist die Wärmerückgewinnungseinheit 10 und im zweiten Mittenteil 34' die Wärmerückgewinnungseinheit 12 angeordnet. Jeder der beiden Endabschnitte 26, 28 ist durch eine horizontale Endabschnitt-Zwischenwand 36 in je zwei übereinander angeordnete Endräume 38, 38' bzw. 40, 40' unterteilt.

Die den ersten Endabschnitt 26 begrenzende Stirnwand 42 des Gehäuses 20 weist einen als Anschluss für die Aussenluft AU dienenden Durchlass 44 auf, der in im Endraum 38 angeordnete Luftfilter 46 mündet. Oberhalb des Anschlusses 44 weist die Stirnwand 42 einen weiteren Durchlass auf, der als Fortluftanschluss 48 dient, um die durch den Endraum 38' strömende Fortluft FO durch ein nicht gezeigtes Kanalsystem an die Umgebung zu leiten.

In ähnlicher Art und Weise weist die gegenüberliegende Stirnwand 42' einen Durchlass auf, der als Zuluftanschluss 50 dient, um die aus dem Endraum 40 ausströmende Zuluft ZU durch ein ebenfalls nicht gezeigtes weiteres Kanalsystem dem Innern eines zu klimatisierenden Gebäudes zuzuleiten. Vom Innern des Gebäudes her kommt ein weiteres, ebenfalls nicht gezeigtes Kanalsystem, das an einen Abluftanschluss 52 angeschlossen ist, welcher dieses Kanalsystem mit dem Endraum 40' verbindet. In diesem Endraum 40' sind weitere Luftfilter 46' angeordnet, die dazu bestimmt sind, aus dem Abluftstrom AB Staubpartikel auszufiltern.

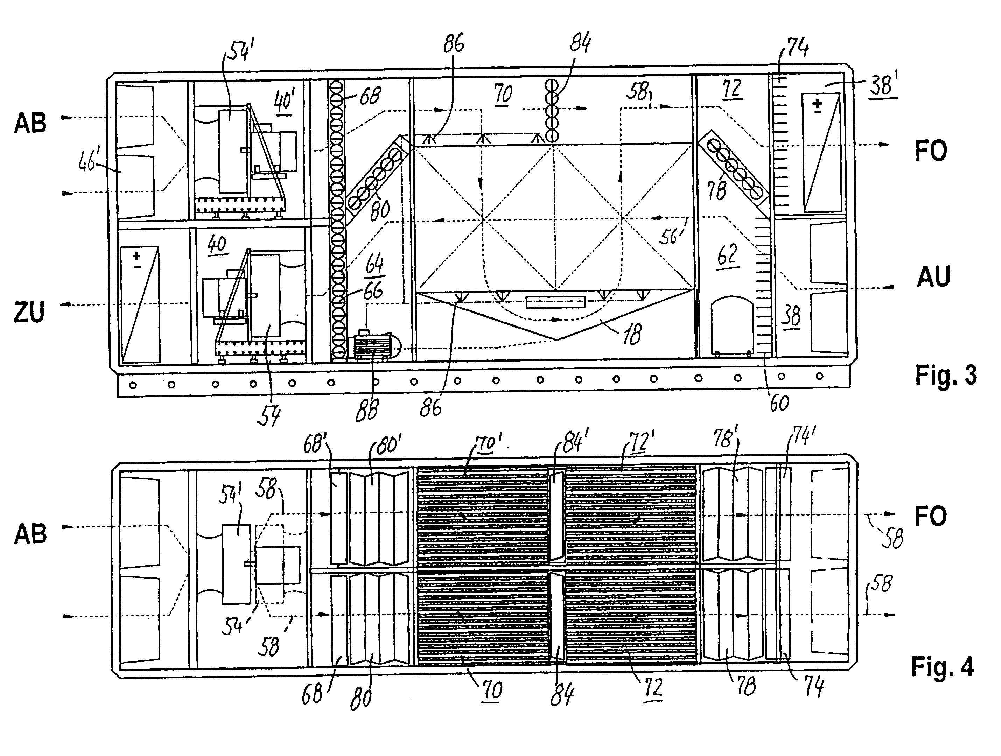

In den Endräumen 40 und 40' ist je ein Ventilator 54, 54' angeordnet, die dazu bestimmt sind, einen Aussenluft-Zuluftstrom 56 bzw. Abluft-Fortluftstrom 58 (vergleiche Fig. 3 bis 7) durch die Wärmerückgewinnungseinheiten 10, 12 zu fördern. Die beiden Wärmerückgewinnungseinheiten 10, 12 sind über Klappensysteme derart mit den Endräumen 38, 38' bzw. 40, 40' verbunden, dass sie sowohl rekuperativ als auch regenerativ betrieben werden können. Im rekuperativen Betrieb dienen die Wärmerückgewinnungseinheiten 10, 12 als Wärmeübertrager, wobei der Aussenluft-Zuluftstrom 56 durch das erste Strömungskanalsystem 14 und gleichzeitig der Abluft-Fortluftstrom 58 durch das zweite Strömungskanalsystem 16 geführt wird. Im regenerativen Betrieb wird der Aussenluft-Zuluftstrom 56 derart geführt, dass er jeweils während einer Betriebsphase bestimmter Zeitdauer das erste und zweite Strömungskanalsystem 14, 16 nur einer Wärmerückgewinnungseinheit 10 oder 12 und während einer nachfolgenden Betriebsphase bestimmter Zeitdauer die Strömungskanalsysteme 14, 16 nur der anderen Wärmerückgewinnungseinheit 12, 10 durchströmt, während der Abluft-Fortluftstrom 58 gegengleich geführt wird. In diesem Fall dienen die im Wechsel vom einen und andern Luftstrom 56, 58 durchströmten Wärmerückgewinnungseinheiten 10, 12 als Wärmespeicher.

In der ersten Querwand 22 ist beidseitig der Mittenabschnitt-Zwischenwand 32 je ein erstes Klappensystem 60, 60' angeordnet, das dynamisch ausgebildet ist und dem Endraum 38 mit einem entsprechenden ersten Anschlussraum 62 bzw. 62' verbindet, sofern der Druck im Endraum 38 grösser ist als jener im betreffenden ersten Anschlussraum 62, 62'. In den ersten Anschlussraum 62, 62' mündet das eine Ende des ersten Strömungskanalsystems 14 der betreffenden Wärmerückgewinnungseinheit 10, 12. Das andere Ende des ersten Strömungskanalsystems 14 mündet in einen zweiten Anschlussraum 64 bzw. 64'. Zwischen diesen Anschlussräumen 64 bzw. 64' und dem Endraum 40 befindet sich in der zweiten Querwand 24 je ein zweites Klappensystem 66, 66', das motorisch gesteuert ausgebildet ist.

Der Endraum 40' ist beidseits der Mittenabschnitt-Zwischenwand 32 je über ein in der zweiten Querwand 24 angeordnetes drittes Klappensystem 68, 68', das ebenfalls motorisch gesteuert ausgebildet ist, mit einem dritten Anschlussraum 70 bzw. 70' verbindbar. In den dritten Anschlussraum 70 bzw. 70' mündet das eine Ende des zweiten Strömungskanalsystems 16 der Wärmerückgewinnungseinheit 10 bzw. 12. Andernends münden die zweiten Strömungskanalsysteme 16 in je einen vierten Anschlussraum 72 bzw. 72'. Zwischen diesen vierten Anschlussräumen 72, 72' und dem Endraum 38' befinden sich in der ersten Querwand 22 je ein viertes Klappensystem 74 bzw. 74', das dynamisch ausgebildet ist. Die vierten Klappensysteme 74, 74' befinden sich in Offenstellung, wenn der Druck in den vierten Anschlussraum 72, 72' höher ist als der Druck im Endraum 38'.

Die ersten Anschlussräume 62, 62' sind durch eine Trennwand 76 von den entsprechenden vierten Anschlussräumen 72, 72' getrennt und über ein in dieser Trennwand 76 angeordnetes weiteres Klappensystem 78, das motorisch gesteuert ausgebildet ist, miteinander verbindbar. Desgleichen sind die zweiten Anschlussräume 64, 64' durch eine weitere Trennwand 76' von den entsprechenden dritten Anschlussräumen 70, 70' getrennt und über ein in dieser Trennwand 76' angeordnetes weiteres Klappensystem 80 bzw. 80' verbindbar.

Schlussendlich sind die dritten Anschlussräume 70, 70' von den entsprechenden vierten Anschlussräumen 72, 72' durch eine weitere Trennwand 82 voneinander getrennt. In dieser Trennwand 82 ist je ein Bypass-Klappensystem 84 bzw. 84', das motorisch gesteuert ausgebildet ist, angeordnet.

Im Innern der wannenartig ausgebildeten Auffang- und Umlenkbecken 18 und oberhalb der Plattenwärmeübertrager 10", 12" befinden sich Düsenstöcke 86, die dazu bestimmt sind, die Plattenwärmeübertrager 10', 10" bzw. 12', 12" von unten und die Plattenwärmeübertrager 10", 12" auch von oben sowie den durch das zweite Strömungskanalsystem 16 geführten Fluidstrom mit Wasser zur adiabatischen Kühlung zu besprühen. Das nicht vom Fluidstrom aufgenommene Wasser fliesst in die Auffang- und Umlenkbecken 18 zurück, wo es mittels einer Pumpe 88 entnommen und wiederum den Düsenstöcken 86 zugeführt wird.

Mit 90 ist ein Kompressor bezeichnet, der mit Verdampfer-Kondensatoreinheiten 92 in den Endräumen 38' und 40 verbunden ist. Der Kompressor 90 und diese Verdampfer-Kondensatoreinheiten 92 bilden ein integriertes zusätzliches umschaltbares Heiz- und Kälteaggregat, in der Art einer Wärmepumpe mit umkehrbarem Arbeitsmittelkreislauf. Es sei erwähnt, dass je nach Einsatzzweck des Klimagerätes auf das zusätzliche Heiz- und Kälteaggregat 90, 92 verzichtet werden kann, oder ein nicht umschaltbares Heiz- oder Kälteaggregat vorgesehen sein kann. Ebenfalls ist die Vorrichtung zur adiabatischen Kühlung nicht zwingend notwendig, aber vorteilhafterweise vorhanden. Anstelle eines eingebauten Heiz- und/oder Kälteaggregats ist es auch denkbar, externe Heiz- und/oder Kälteaggregate zu verwenden.

Die Funktionsweise des obenbeschriebenen und in den Fig. 1 und 2 gezeigten Klimagerätes wird nun unter Bezugnahme auf die Fig. 3 bis 7 bei den verschiedenen Betriebsarten beschrieben. Diese Figuren entsprechen den Fig. 1 und 2, gleiche Teile des Klimagerätes sind mit gleichen Bezugszeichen versehen und sind nur insofern in die Fig. 3 bis 7 eingeführt, als dies für das Verständnis notwendig ist.

Unter der Annahme, dass in einem zu klimatisierenden Raum oder Gebäude eine Innentemperatur von ungefähr 20°C aufrechterhalten werden soll, wird das erfindungsgemässe Klimagerät mit Vorteil wie folgt betrieben: Bei Aussentemperaturen von ca. -20° bis ca. +5°C im regenerativen Betrieb, von ca. 5° bis ca. 15°C rekuperativ mit vorzugsweise geregelter Wärmerückgewinnung, von ca. 15° bis ca. 25°C und je nach Feuchte bis 32°C rekuperativ mit adiabatischer Kühlung und bei höheren Temperaturen zusätzlich mit einem eingebauten Kälteaggregat; bei sehr hohen tropischen Temperaturen mit hoher Aussenluftfeuchtigkeit regenerativ mit Kältrückgewinnung und mit einem eingebauten Kälteaggregat. Bei sehr tiefen Aussentemperaturen oder im Fall, dass im klimatisierten Raum nur unbedeutende zusätzliche Wärmemengen freigesetzt werden, kann ein zusätzliches Heizaggregat vorgesehen sein. Falls notwendig, kann ein umschaltbares zusätzliches Heiz- und Kälteaggregat eingebaut sein.

Die Führung des Aussenluft-Zuluftstroms 56 und Abluft-Fortluftstroms 58 im rekuperativen Betrieb ist in den Fig. 3 und 4 gezeigt. Die zweiten und dritten Klappensysteme 66, 66' bzw. 68, 68' befinden sich in Offenstellung, wogegen sich die weiteren Klappensysteme 78, 78' und 80, 80' sowie das Bypass-Klappensystem 84, 84' in Schliessstellung befinden. Werden die Ventilatoren 54, 54' in Gang gesetzt, öffnen die ersten und vierten Klappensysteme 60, 60' bzw. 72, 72' selbsttätig. Der Ventilator 54 saugt Aussenluft AU an, welche durch die Luftfilter 46 in den Endraum 38 und von dort durch die beiden ersten Klappensysteme 60, 60' in die ersten Anschlussräume 62 und 62' gelangt. Von dort durchströmt die Aussenluft das erste Strömungskanalsystem 14 der Wärmerückgewinnungseinheiten 10 und 12 und tritt in die zweiten Anschlussräume 64, 64' aus. Von dort gelangt der Luftstrom durch die geöffneten zweiten Klappensysteme 66, 66' in den Endraum 40, wo er den Ventilator 54 durchströmt und als Zuluftstrom ZU dem zu klimatisierenden Raum zugeführt wird. Gleichzeitig wird mittels des Ventilators 54' dem zu klimatisierenden Raum Abluft AB entnommen, welche durch die Luftfilter 46' hindurch in den Endraum 40' gelangt. Die geöffneten dritten Klappensysteme 68, 68' lassen den Abluftstrom in die beiden dritten Anschlussräume 70, 70' eintreten, von wo er durch das zweite Strömungskanalsystem 16 der Wärmerückgewinnungseinheiten 10 und 12 und im Auffang- und Umlenkbecken 18 umgelenkt, in die vierten Anschlussräume 72, 72' gelangt. Von hier strömt der Luftstrom als Fortluft FO durch die vierten Klappensysteme 74, 74' in den Endraum 38' und von diesem in die Umgebung.

Ist die Umgebungstemperatur tiefer als die Temperatur des zu klimatisierenden Raumes, wird in den als Wärmeübertrager nun wirkenden Wärmerückgewinnungseinheiten 10 und 12 dem Abluft-Fortluftstrom 58 Wärme entnommen und an den Aussenluft-Zuluftstrom 56 übertragen, wodurch dieser aufgewärmt wird. Ist hingegen die Aussentemperatur höher als die gewünschte Temperatur im zu klimatisierenden Raum, wird vom Aussenluft-Zuluftstrom 56 Wärme an den Abluft-Fortluftstrom 58 übertragen, was zu einer Abkühlung der Zuluft ZU führt. Gleichzeitig können der Abluft-Fortluftstrom adiabatisch und die Wärmerückgewinnungseinheiten 10, 12 durch Besprühen mit Wasser mittels den Düsenstöcken 86 gekühlt werden, wodurch der Aussenluft-Zuluftstrom 56 indirekt gekühlt wird.

Zur Temperaturregelung im zu klimatisierenden Raum können die Bypass-Klappensysteme 84, 84' geregelt werden. Dadurch wird ein Teil des Abluft-Fortluftstromes an den Wärmerückgewinnungseinheiten 10, 12 vorbei geführt.

Es ist auch denkbar, die weiteren Klappensysteme 80, 80' nach Bedarf zu öffnen, um ein Teil des Abluft-Fortluftstromes 58 vor Durchströmen der Wärmerückgewinnungseinheiten 10, 12 dem Aussenluft-Zuluftstrom 56 zuzuführen und gemischt mit diesem dem zu klimatisierenden Raum zuzuleiten.

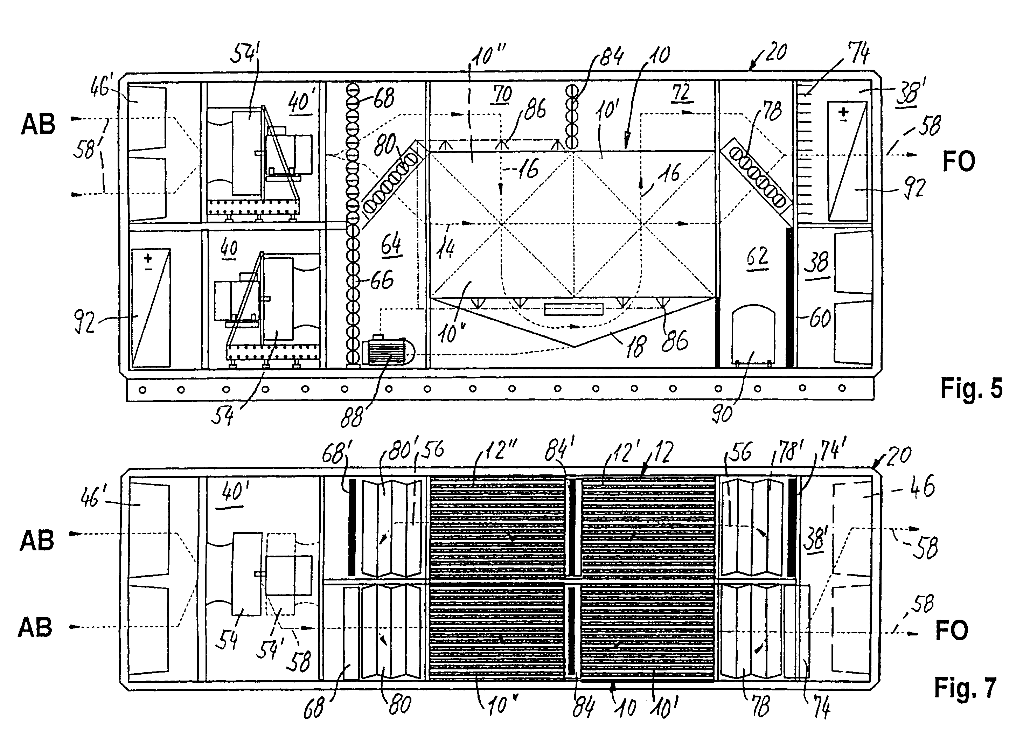

Die Führung des Aussenluft-Zuluftstroms 56 und Abluft-Fortluftstroms 58 im regenerativen Betrieb ist in den Fig. 5 bis 7 gezeigt. In einer ersten Betriebsphase, während einer bestimmten Zeitdauer, wird der Aussenluft-Zuluftstrom 56 nur durch die eine Wärmerückgewinnungseinheit 10 oder 12 geführt, während gleichzeitig der Abluft-Fortluftstrom 58 nur durch die andere Wärmerückgewinnungseinheit 12 bzw. 10 geführt wird. In einer anschliessenden zweiten Betriebsphase während einer bestimmten Zeitdauer, werden dann die beiden Ströme 56, 58 durch die je andere Wärmerückgewinnungseinheit 10 bzw. 12 geführt. Dieser periodische Wechsel erfolgt mit einer Frequenz von ca. 30 bis ca. 60 Sekunden.

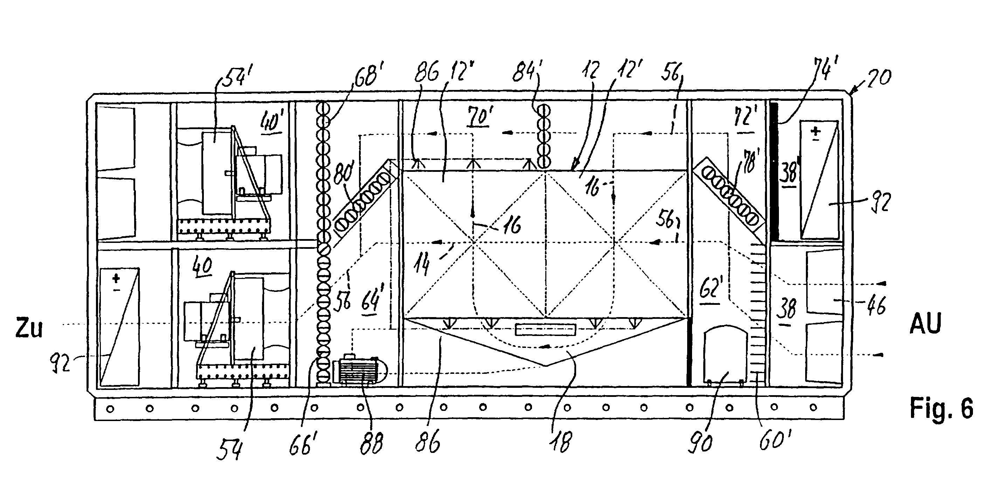

Die Fig. 5 bis 7 zeigen jene Betriebsphase, in welcher der Aussenluft-Zuluftstrom 56 durch die Wärmerückgewinnungseinheit 12 und der Abluft-Fortluftstrom 58 durch die Wärmerückgewinnungseinheit 10 geführt wird. Wie dies den Fig. 6 und 7 entnehmbar ist, befindet sich das der Wärmerückgewinnungseinheit 12 zugeordnete zweite Klappensystem 66' und die ebenfalls dieser Wärmerückgewinnungseinheit 12 zugeordneten weiteren Klappensysteme 78' und 80' in Offenstellung, während die dieser Wärmeübertragungseinheit 12 zugeordneten dritten, vierten und Bypass-Klappensysteme 68', 74' und 84' sich in Schliessstellung befinden. Bei laufendem Ventilator 54 ist das entsprechende erste Klappensystem 60' automatisch in Offenstellung und die durch die Luftfilter 46 angesaugte Aussenluft AU gelangt vom Endraum 38 in den ersten Anschlussraum 62'. Von hier durchströmt ein Teil des Fluidstroms das erste Strömungskanalsystem 14, während der andere Teil durch das weitere Klappensystem 78' in den vierten Anschlussraum 72' gelangt und von diesem her das zweite Strömungskanalsystem 16 durchströmt. Dieser Teil gelangt in den dritten Anschlussraum 70' und von diesem durch das geöffnete Klappensystem 80' in den zweiten Anschlussraum 64', wo die beiden Teilströme sich vereinigen und durch das zweite Klappensystem 66 in den Endraum 38' gelangen, von wo sie mittels des Ventilators 54 als Zuluftstrom ZU dem zu klimatisierenden Raum zugeführt werden. Infolge des Unterdrucks im vierten Anschlussraum 72' bezüglich des Drucks im Endraum 38' ist das vierte Klappensystem 74' automatisch geschlossen.

Gleichzeitig wird, wie in den Fig. 5 und 7 gezeigt, der Abluft-Fortluftstrom 58 nur durch die Wärmerückgewinnungseinheit 10 geführt. Zu diesem Zweck sind die der Wärmerückgewinnungseinheit 10 zugeordneten ersten und zweiten Klappensysteme 60, 66 geschlossen und die dritten und vierten Klappensysteme 68, 74 und die entsprechenden weiteren Klappensysteme 78, 80 geöffnet. Die vom Ventilator 54' angesaugte und durch die Luftfilter 46' in den Endraum 40' eintretende Abluft AB gelangt von hier in den dritten Anschlussraum 70, wo sich der Fluidstrom aufteilt. Der eine Teil durchströmt das zweite Strömungskanalsystem 16 in U-Form und gelangt unmittelbar in den vierten Anschlussraum 72, wogegen der andere Teil durch das weitere Klappensystem 80 in den dritten Anschlussraum 70 gelangt und von hier das erste Strömungskanalsystem 14 durchströmt. Dieser Teil gelangt dann vom ersten Anschlussraum 62 durch das geöffnete weitere Klappensystem 78 ebenfalls in den vierten Anschlussraum 72, wo sich die beiden Teilströme zu einem Fortluftstrom FO vereinigen, welcher durch das automatisch geöffnete vierte Klappensystem 74 in den Endraum 38' und von diesem an die Umgebung gelangt. Da der Druck im ersten Anschlussraum 62 höher ist als im Endraum 38, ist das erste Klappensystem 60 automatisch geschlossen.

Nach dem Ablauf einer Betriebsphase werden die der einen Wärmerückgewinnungseinheit 10 zugeordneten Klappensysteme in jene Stellung verbracht, die in der vorgängigen Betriebsphase die der anderen Wärmerückgewinnungseinheit 12 zugeordneten Klappensysteme eingenommen haben und umgekehrt. Dies hat zur Folge, dass während einer Betriebsphase der wärmere Luftstrom, sei es der Aussenluft-Zuluftstrom 56 oder Abluft-Fortluftstrom 58 die entsprechende, nun als Wärmespeicher wirkende Wärmerückgewinnungseinheit 10 bzw. 12 aufwärmt, während der andere Luftstrom der vorgängig aufgewärmten Wärmerückgewinnungseinheit 12 bzw. 10 Wärme entnimmt.

Da das Klimagerät insbesondere bei extremen Aussentemperaturen regenerativ betrieben wird, kann, wenn notwendig und ein eingebautes Heiz- und Kälteaggregat 90, 92 vorhanden ist, entweder zusätzlich dem Abluft-Fortluftstrom 58 Wärme entzogen und dem Aussenluft-Zuluftstrom 56 zur zusätzlichen Heizung zugeführt werden, oder dem Aussenluft-Zuluftstrom 56 zu dessen Abkühlung mittels des zusätzlichen Heiz- und Kälteaggregates 90, 92 Wärme entzogen und dem Abluft-Fortluftstrom zugeführt werden.

Auch im Zusammenhang mit dem regenerativen Betrieb sei erwähnt, dass die Möglichkeit besteht, mittels Steuerung der Bypass-Klappensysteme 84, 84' ein Teil des Aussenluft-Zuluftstroms 56 und/oder des Abluft-Fortluftstroms 58 an der entsprechenden Wärmerückgewinnungseinheit 10, 12 vorbeizuleiten. Dies ermöglicht eine äusserst effiziente Regelung.

Selbstverständlich ist es denkbar, sowohl die Wärmerückgewinnungseinheiten als auch die Klappensysteme und Ventilatoren bezüglich den in den Figuren gezeigten Anordnung unterschiedlich anzuordnen. Es ist selbstverständlich auch denkbar, dass jede Wärmerückgewinnungseinheit nur einen einzigen oder mehr als zwei Plattenwärmeübertrager oder unterschiedlich aufgebaute auch zur Wärmespeicherung geeignete Wärmeübertrager aufweist.

Der Vollständigkeit halber sei auch erwähnt, dass die Endräume 38, 38', 40, 40' nicht zwingend notwendig sind. Es ist denkbar, dass Rohrleitungen direkt bis zu den Querwänden 22, 24 geführt sind und somit die Querwände die Stirnwände des Klimagerätes bilden.

Es ist auch denkbar, die Luftströme im rekuperativen Betrieb nur durch eine der beiden Wärmerückgewinnungseinheiten strömen zu lassen. Dabei sind allerdings grössere Strömungsgeschwindigkeiten und ein höherer Strömungswiderstand in Kauf zu nehmen. Ähnliches gilt, wenn im regenerativen Betrieb die Luftströme nur durch jeeils eines der Strömungskanalsysteme geführt würden.

## Patentansprüche

1. Klimagerät mit einer zum Durchfliessen von zwei Fluidströmen bestimmten, zwei Strömungskanalsysteme (14,16) aufweisenden Wärmerückgewinnungseinheit (10,12), dadurch gekennzeichnet, dass das Klimagerät mindestens zwei Wärmerückgewinnungseinheiten (10,12) aufweist, die wahlweise für rekuperativen Betrieb als Wärmeübertrager und regenerativen Betrieb als Wärmespeicher betreibbar sind, wobei im rekuperativen Betrieb die beiden Strömungskanalsysteme (14,16) einer Wärmerückgewinnungseinheit (10,12) gleichzeitig von je einem der Fluidströme (56,58) durchflossen sind, und im regenerativen Betrieb die eine Wärmerückgewinnungseinheit (10,12), im Wechsel mit der andern Wärmerückgewinnungseinheit (12,10), nacheinander von den zwei Fluidströmen (56,58) durchflossen ist.

2. Klimagerät nach Anspruch 1, dadurch geknnezichnet, dass der eine Fluidstrom (56) ein Aussenluft-Zuluftstrom und der andere Fluidstrom (58) ein Abluft-Fortluftstrom ist.

3. Klimagerät nach Anspruch 1 oder 2, dadurch gekennzeichnet, dass im rekuperativen Betrieb die zwei Wärmerückgewinnungseinheiten (10,12) parallegeschaltet sind.

4. Klimagerät nach einem der Ansprüche 1 bis 3, dadurch gekennzeichnet, dass im regenerativen Betrieb beide Strömungskanalsysteme (14,16) jeder der Wärmerückgewinnungseinheiten (10,12) parallegeschaltet sind.

5. Klimagerät nach einem der Ansprüche 1 bis 4, gekennzeichnet durch ein zur Berieselung der Wärmerückgewinnungseinheiten (10,12) und des Abluft-Fortluftstromes (58) bestimmtes Berieselungssystem (86,88) zur adiabatischen Kühlung.

6. Klimagerät nach einem der Ansprüche 1 bis 5, dadurch gekennzeichnet, dass das eine Strömungskanalsystem (14) jeder Wärmerückgewinnungseinheit (10,12) je einerseits über ein erstes Klappensystem (60,60') mit einem Aussenluftanschluss (44) und andererseits über ein zweites Klappensystem (66,66') mit einem Zuluftanschluss (50), und das andere Strömungskanalsystem (16) je einerseits über ein drittes Klappensystem (68,68') mit einem Abluftanschluss (52) und andererseits über ein viertes Klappensystem (74,74') mit einem Fortanschluss (48) abtrennbar verbunden ist, und dass die beiden Strömungskanalsysteme (14,16) jeder Wärmerückgewinnungseinheit (10,12) beiderends je über ein weiteres Klappensystem (78,78',80,80') miteinander verbindbar sind.

7. Klimagerät nach Anspruch 6, dadurch gekennzeichnet, dass der Abluftanschluss (52) und der Fortluftanschluss (48) über ein Bypassklappensystem (84,84') zur Umgehung der Wärmerückgewinnungseinheiten (10,12) miteinander verbindbar sind.

8. Klimagerät nach Anspruch 6 oder 7, dadurch gekennzeichnet, dass das zweite und dritte Klappensystem (66,66',68,68'), die weiteren Klappensysteme (78,78', 80,80') sowie gegebenenfalls das Bypassklappensystem (84,84') motorisch gesteuert und das erste und vierte Klappensystem (60,60',74,74') dynamisch ausgebildet sind.

9. Klimagerät nach einem der Ansprüche 5 bis 8, dadurch gekennzeichnet, dass es ein quaderförmiges Gehäuse (20) mit, in Längsrichtung (L) gesehen, zwei Querwänden (22,24) aufweist, die einen zwischen den Trennwänden (22,24) angeordneten Mittenabschnitt (30) von Endabschnitten (26,28) trennen, wobei der Mittenabschnitt (30) durch eine in Längsrichtung (L) verlaufende Mittenabschnitt-Zwischenwand (32) in zwei Mittenteile (34,34') und jeder der Endabschnitte (26,28) durch je eine in Längsrichtung (L) und quer, vorzugsweise rechtwinklig zur Mittenabschnitt-Zwischenwand (32) verlaufende Endabschnitt-Zwischenwand (36) in zwei Endräume (38,38';40,40') unterteilt sind, in jedem Mittenteil (34,34') eine Wärmerückgewinnungseinheit (10,12) angeordnet ist, jeweils das erste Strömungskanalsystem (14) einerseits in einen ersten und andererseits in einen zweiten Anschlussraum (62,62',64,64') und das zweite Strömungskanalsysten (16) einerseits in einen dritten und andererseits vierten Anschlussraum (70,70',72,72') im betreffenden Mittenteil (34,34') münden, diese Anschlussräume über die zugeordneten, in den Querwänden (22,24) angeordneten Klappensystemen (60,60',66,66',68,68',74,74') mit den entsprechenden Endräumen (38,38',40,40') und der erste Anschlussraum (62,62') mit dem vierten (72,72') sowie der zweite Anschlussraum (64,64') mit den dritten (70,70') über je eines der weiteren Klappensysteme (78,78',80,80') sowie gegebenenfalls der dritte Anschlussraum (70,70') mit dem vierten (72,72') über das Bypassklappensystem (84,84') verbindbar sind.

10. Klimagerät nach einem der Ansprüche 1 bis 9, dadurch gekennzeichnet, dass jede Wärmerückgewinnungseinheit (10,12) zwei in Reihe angeordnete Kreuzstrom-Plattenwärmeübertrager (10,10",12',12") aufweist, deren Masse im regenerativen Betrieb als Wärmespeicher dient.

11. Klimagerät nach einem der Ansprüche 1 bis 10, gekennzeichnet durch ein zusätzliches, vorzugsweise umschaltbares Heiz- oder Kälteaggregat (90,92).

## Claims

1. Air conditioner with a heat recovery unit (10, 12) having two flow channel systems (14, 16) for the passage of two fluid flows, characterized in that the air conditioner has at least two heat recovery units (10, 12) which are optionally operable as heat exchangers in recuperative mode and as heat accumulators in regenerative mode, wherein in the recuperative mode both flow channel systems (14, 16) of a heat recovery unit (10, 12) have the respective fluid flows (56, 58) passing through them simultaneously, and in the regenerative mode one heat recovery unit (10, 12) has the two fluid flows (56, 58) passing through it in succession, in alternation with the other heat recovery unit (12, 10).

2. Air conditioner according to Claim 1, characterized in that one fluid flow (56) is a supply flow of surrounding air and the other fluid flow (58) is an exhaust flow of outgoing air.

3. Air conditioner according to Claim 1 or 2, characterized in that in recuperative mode the two heat recovery units (10, 12) are connected in parallel.

4. Air conditioner according to any one of Claims 1 to 3, characterized in that in regenerative mode both flow channel systems (14, 16) of each of the heat recovery units (10, 12) are connected in parallel.

5. Air conditioner according to any one of Claims 1 to 4, characterized by a spray system (86, 88) for spraying the heat recovery units (10, 12) and the exhaust flow of outgoing air (58) to provide adiabatic cooling.

6. Air conditioner according to any one of Claims 1 to 5, characterized in that one flow channel system (14) of each heat recovery unit (10, 12) is separately connectable by a first shutter system (60, 60') to a surrounding air connection (44) on the one hand and by a second shutter system (66, 66') to a supply air connection (50) on the other hand, and the other flow channel system (16) is separately connectable by a third shutter system (68, 68') to an outgoing air connection (52) on the one hand and by a fourth shutter system (74, 74') to an exhaust connection (48) on the other hand, and in that the two flow channel systems (14, 16) of each heat recovery unit (10, 12) are interconnectable, at both ends, by additional shutter systems (78, 78', 80, 80').

7. Air conditioner according to Claim 6, characterized in that the outgoing air connection (52) and the exhaust air connection (48) are interconnectable by a bypass shutter system (84, 84') for bypassing the heat recovery units (10, 12).

8. Air conditioner according to Claim 6 or 7, characterized in that the second and third shutter systems (66, 66', 68, 68') and the additional shutter systems (78, 78', 80, 80'), and also, if required, the bypass shutter system (84, 84'), are power-operated, and the first and fourth shutter systems (60, 60', 74, 74') are designed to operate dynamically.

9. Air conditioner according to any one of Claims 5 to 8, characterized in that it has a casing (20) in the shape of a rectangular parallelepiped with, viewed in the longitudinal direction (L), two transverse partition walls (22, 24) which separate a centre section (30) arranged between the partition walls, from end sections (26, 28), wherein the centre section (30) is subdivided by a centre-section partition (32), extending in the longitudinal direction (L), into two central parts (34, 34'), and each of the end sections (26, 28) is subdivided by an end-section partition (36), extending transversely and preferably at right angles to the centre-section partition (32), into two end chambers (38, 38'; 40, 40'); a heat recovery unit (10, 12) is arranged in each central part (34, 34'); within the central part concerned (34, 34'), each first flow channel system (14) communicates with a first connection chamber (62, 62') on the one hand and with a second connection chamber (64, 64') on the other hand, and each second flow channel system (16) communicates with a third connection chamber (70, 70') on the one hand and with a fourth connection chamber (72, 72') on the other hand; these connection chambers are connectable by their respective shutter systems (60, 60', 66, 66', 68, 68', 74, 74') arranged in the transverse partition walls (22, 24) to the corresponding end chambers (38, 38', 40, 40'); and the first connection chamber (62, 62') is connectable to the fourth (72, 70'), as is the second connection chamber (64, 64') to the third (70, 70'), by the appropriate one of the additional shutter systems (78, 78', 80, 80'), the third connection chamber (70, 70') being, if required, connectable to the fourth (72, 72') by the bypass shutter system (84, 84').

10. Air conditioner according to any one of Claims 1 to 9, characterized in that each heat recovery unit (10, 12) has two countercurrent plate heat exchangers (10, 10", 12', 12") arranged in series, whose mass serves as heat accumulator in regenerative mode.

11. Air conditioner according to any one of Claims 1 to 10, characterized by additional, preferably switchable, heating or cooling unit (90, 92).

## Revendications

1. Climatiseur comprenant une unité de récupération de chaleur (10, 12) munie de deux systèmes de canaux de circulation (14, 16) destinés à laisser passer deux flux d'air, caractérisé en ce que le climatiseur comprend au moins deux unités de récupération de chaleur (10, 12), qui peuvent être exploitées au choix en mode récupérateur en tant qu'échangeurs de chaleur et en mode régénérateur en tant qu'accumulateurs de chaleur, les deux systèmes de canaux de circulation (14, 16) d'une unité de récupération de chaleur (10, 12) étant traversés, en mode récupérateur, chacun en même temps par l'un des flux d'air (56, 58), et, en mode régénérateur, l'une des unités de récupération de chaleur (10, 12) et, en alternance, l'autre unité de récupération de chaleur (12, 10), étant traversées par les deux flux d'air (56, 58) l'un après l'autre.

2. Climatiseur selon la revendication 1, caractérisé en ce que l'un des flux d'air (56) est un flux d'air extérieur amené et l'autre flux d'air (58) est un flux d'air usé sortant.

3. Climatiseur selon la revendication 1 ou 2, caractérisé en ce que, en mode récupérateur, les deux unités de récupération de chaleur (10, 12) sont branchées en parallèle.

4. Climatiseur selon l'une quelconque des revendications 1 à 3, caractérisé en ce que, en mode régénérateur, les deux systèmes de canaux de circulation (14, 16) de chaque unité de récupération de chaleur (10, 12) sont branchés en parallèle.

5. Climatiseur selon l'une quelconque des revendications 1 à 4, caractérisé par un système de pulvérisation (86, 88) destiné à asperger les unités de récupération de chaleur (10, 12) et le flux d'air usé sortant (58), afin de produire un refroidissement adiabatique.

6. Climatiseur selon l'une quelconque des revendications 1 à 5, caractérisé en ce que l'un des systèmes de canaux de circulation (14) de chaque unité de récupération de chaleur (10, 12) est relié de manière séparable, d'une part, avec un branchement pour air extérieur (44) par l'intermédiaire d'un premier système de clapets (60, 60') et, d'autre part, avec un branchement pour air amené (50) par l'intermédiaire d'un deuxième système de clapets (66, 66'), et l'autre système de canaux de circulation (16) est relié de manière séparable respectivement, d'une part, avec un branchement pour air usé (52) par l'intermédiaire d'un troisième système de clapets (68, 68') et, d'autre part, avec un branchement pour air sortant (48) par l'intermédiaire d'un quatrième système de clapets (74, 74'), et en ce que les deux systèmes de canaux de circulation (14, 16) de chaque unité de récupération de chaleur (10, 12) peuvent être reliés l'un à l'autre aux deux extrémités, chacun par l'intermédiaire d'un autre système de clapets (78, 78', 80, 80').

7. Climatiseur selon la revendication 6, caractérisé en ce que le branchement pour air usé (52) et le branchement pour air sortant (48) peuvent être reliés l'un à l'autre par un système de clapets à by-pass (84, 84') pour contourner les unités de récupération de chaleur (10, 12).

8. Climatiseur selon la revendication 6 ou 7, caractérisé en ce que le deuxième et le troisième système de clapets (66, 66', 68, 68'), les autres systèmes de clapets (78, 78', 80, 80'), ainsi que, le cas échéant, le système de clapets à by-pass (84, 84') sont commandés par un moteur et le premier et le quatrième système de clapets (60, 60', 74, 74') sont conçus pour fonctionner en mode dynamique.

9. Climatiseur selon l'une quelconque des revendications 5 à 8, caractérisé en ce que ledit climatiseur comporte un boîtier (20) parallélépipédique muni de deux cloisons transversales (22, 24), par référence au sens longitudinal (L), qui constituent une séparation entre une zone centrale (30), disposée entre les deux cloisons transversales (22, 24), et deux zones d'extrémité (26, 28), la zone centrale étant partagée en deux parties centrales (34, 34') par une cloison intermédiaire (32), qui s'étend dans le sens longitudinal (L), et chaque zone d'extrémité (26, 28) étant séparée en deux compartiments d'extrémité (38, 38') par une cloison intermédiaire (36) qui s'étend dans le sens longitudinal (L) et transversalement, de préférence perpendiculairement à la cloison intermédiaire (32) de la zone centrale, une unité de récupération de chaleur (10, 12) est disposée dans chaque partie centrale (34, 34'), le premier système de canaux de circulation (14) débouche dans la partie centrale (34, 34') concernée, d'une part, dans un premier et, d'autre part, dans un deuxième compartiment de raccordement (62, 62', 64, 64') et le deuxième système de canaux de circulation (16) d'une part, dans un troisième et, d'autre part, dans un quatrième compartiment de raccordement (70, 70', 72, 72'), lesdits compartiments de raccordement peuvent être reliés par l'intermédiaire des systèmes de clapets (60, 60', 66, 66', 68, 68', 74, 74') associés, montés dans les cloisons transversales (22, 24), avec les compartiments d'extrémité (38, 38', 40, 40') correspondants, et le premier compartiment de raccordement (62, 62') avec le quatrième (72, 72'), ainsi que le deuxième compartiment de raccordement (64, 64') avec le troisième (70, 70'), chacun par l'intermédiaire de l'un des autres systèmes de clapets (78, 78', 80, 80'), ainsi que, le cas échéant, le troisième compartiment de raccordement (70, 70') avec le quatrième (72, 72') par l'intermédiaire du système de clapets à by-pass (84, 84').

10. Climatiseur selon l'une quelconque des revendications 1 à 9, caractérisé en ce que chaque unité de récupération de chaleur (10, 12) comprend deux échangeurs de chaleur à plaques et à flux croisés (10, 10'', 12', 12''), dont la masse est utilisée comme accumulateur de chaleur en mode régénérateur.

11. Climatiseur selon l'une quelconque des revendications 1 à 10, caractérisé par un groupe supplémentaire de chauffage et refroidissement (90, 92), de préférence commutable.
